# EUROPEAN PATENT APPLICATION

(11) **EP 1 659 599 A2**
(43) Date of publication of application: **24.05.2006**
(21) Application number: 05024902.8
(22) Date of filing: 15.11.2005
(51) Int. Cl.: H01G 9/20

(54) **Counter electrode for dye sensitizing solar cell, and dye sensitzing solar cell having same**

(30) Priority: 17.11.2004 JP 2004333687
(71) Applicant: ENPLAS CORPORATION, Kawaguchi-shi, Saitama-ken 332-0034 (JP)
(72) Inventor: Miyoshi, Kozo, Kitamoto-shi Saitama 364-0014 (JP); Miyasaka, Tsutomu, Machida-shi Tokyo 194-0041 (JP)
(74) Representative: Manitz, Finsterwald & Partner GbR

(57) **Abstract**

In a counter electrode 3 of a dye sensitizing solar cell 1 wherein an electrolyte 4 is filled in a space between a photoelectrode 2 and the counter electrode 3, a corrosion-resistant metallic material film 10 is formed on a counter substrate 8 so as to have a large number of recesses 13 which are formed in a surface thereof and which are arranged in intervals so that the surface of the corrosion-resistant metallic material film 10 has a waveform cross-section, and a conductive catalytic material film 11 is formed on the surface of the corrosion-resistant metallic material film 10 so as to extend along the surface of the corrosion-resistant metallic material film 10.

## Description

### BACKGROUND OF THE INVENTION

### Field of the Invention

The present invention relates to a counter electrode used as a component of a dye sensitizing solar cell, and a dye sensitizing solar cell having the counter electrode.

### Description of the Prior Art

In recent years, from the point of view of environmental issues, solar cells for converting light energy to electric energy have been widely noticed. In particular, dye sensitizing solar cells have been widely noticed since the costs for producing them can be low. Originally, dye sensitizing solar cells are not intended for practical use since they have a low photoelectric transfer efficiency. However, therehas been developed a technique using a porous film of particles having a diameter of nanometers as a semiconductor to increase the surface area of an electrode to cause the electrode to absorb a large amount of dye to conspicuously enhance the photoelectric transfer efficiency of a dye sensitizing solar cell (see, e.g., Japanese Patent Unexamined Publication No. 5-504023 (National Publication of Translated Version of PCT/EP91/00734)).

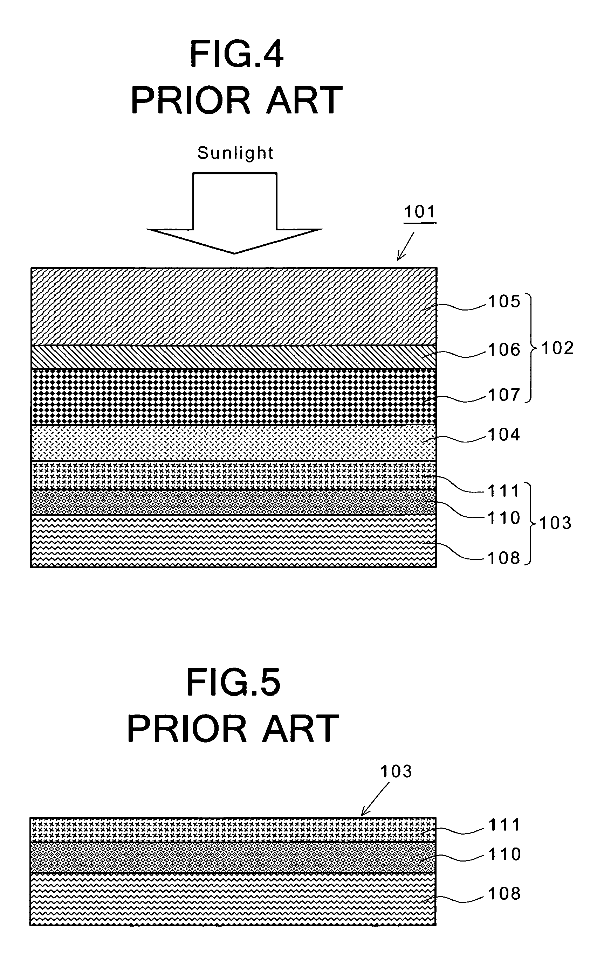

As an example of a conventional dye sensitizing solar cell using such a technique, there is known a dye sensitizing solar cell 101 shown in FIG. 4. The dye sensitizing solar cell 101 schematically shown in FIG. 4 comprises a photoelectrode 102, a counter electrode 103, and an electrolytic solution 104 filled in a space therebetween.

The photoelectrode 102 comprises a substrate member 105, a transparent electrode film 106 formed on the surface of the substrate member 105, and a porous semiconductor electrode film 107 of titanium oxide or the like formed on the surface of the transparent electrode film 106, the porous semiconductor electrode film 107 absorbing a sensitizing dye. The porous semiconductor electrode film 107 is formed by a method comprising the steps of applying a suspension containing semiconductor particles on the transparent electrode film 106, and drying and burning it.

As shown in FIGS. 4 and 5, the counter electrode 103 comprises a counter substrate member 108, a conductive material film 110 formed on the counter substrate member 108, and a conductive catalytic material film 111 formed on the conductive material film 110 by coating a catalyst such as platinum thereon (see, e.g., JapanesePatentLaid-OpenNo. 2002-298936).

The substrate member 105 and the counter substrate member 108 are arranged so that the conductive catalytic material film 111 faces the porous semiconductor electrode film 107 at an interval. The electrolytic solution 104 is filled in the space between the conductive catalytic material film 111 and the porous semiconductor electrode film 107 to form the dye sensitizing solar cell 101.

In such a dye sensitizing solar cell 101, if the sensitizing dye absorbed on the porous semiconductor electrode film 107 is irradiated with sunlight, the sensitizing dye absorbs light in a visible region to be exited. Then, electrons produced by the excitation of the sensitizing dye move in the porous semiconductor electrode film 107 to reach the transparent electrode film 106. The electrons moving to the transparent electrode film 106 move to the conductive material film 110 via an external circuit (not shown) which electrically connects the transparent electrode film 106 to the conductive material film 110. Then, the electrons moving to the conductive material film 110 are designed to move to the electrolytic solution 104 via the conductive catalytic material film 111 to be carried on ions in the electrolytic solution 104 from the counter electrode 103 toward the photoelectrode 102 to return to the sensitizing dye of the porous semiconductor electrode film 107. Such an operation is repeated to extract electric energy.

In order to decrease the amount of the catalyst, such as platinum, of the counter electrode 103 in the dye sensitizing solar cell 101 with this construction, the corrosion-resistant conductive material film (e.g., a film of carbon, or a film of a metallic oxide, such as tin oxide or tantalum oxide, known as a conductive oxide) 110 is formed on the counter substrate member 108, and a thin film of a catalyst, such as platinum, serving as the conductive catalytic material film 111 is formed on the conductive material film 110. However, if the thickness of the conductive catalytic material film 111 is decreased, the electric resistance of the counter electrode 103 increases, so that there is a problem in that the photoelectric transfer efficiency deteriorates. On the other hand, if the thickness of the conductive catalytic material film 111 of platinum or the like is increased, the electric resistance of the counter electrode 103 can be decreased, but the costs for preparing the parts of the counter electrode 103 rise.

### SUMMARY OF THE INVENTION

It is therefore an object of the present invention to eliminate the aforementioned problems and to provide an inexpensive counter electrode for a dye sensitizing solar cell having a high photoelectric transfer efficiency even if a conductive catalytic material film is thin, and a dye sensitizing solar cell having the counter electrode.

In order to accomplish the aforementioned and other objects, according to one aspect of the present invention, there is provided a counter electrode for a dye sensitizing solar cell wherein an electrolyte is filled in a space between a photoelectrode and the counter electrode, the counter electrode comprising: a counter substrate; a corrosion-resistant metallic material film formed on the counter substrate, the corrosion-resistant metallic material film having a large number of recesses which are formed in a surface thereof and which are arranged in intervals so that the surface of the corrosion-resistant metallic material film has a waveform cross-section; and a conductive catalytic material film formed on the surface of the corrosion-resistant metallic material film so as to extend along the surface of the corrosion-resistant metallic material film.

In this counter electrode for a dye sensitizing solar cell, the conductive catalytic material film may have a substantially uniform thickness. Each of the recesses preferably has a depth of 1 to 1000 nm, and more preferably has a depth of 10 to 100 nm. The recesses are preferably arranged at intervals of 1 to 1000 nm, and more preferably arranged at intervals of 1 to 1000 nm. The counter substrate may be made of a resin material. The corrosion-resistant metallic material film may be made of a metal selected from the group consisting of titanium, tantalum, titanium alloys and tantalum alloys. The conductive catalytic material film may be made of platinum, carbon or palladium.

According to another aspect of the present invention, a dye sensitizing solar cell comprises: the above described counter electrode; a photoelectrode arranged so as to face the counter electrode; and an electrolyte filled in a space between the counter electrode and the photoelectrode.

According to the present invention, the surface of the corrosion-resistant metallic material film formed on the counter substrate has a large number of recesses which are formed in a surface thereof and which are arranged in intervals so that the surface of the corrosion-resistant metallic material film has a waveform cross-section, and the conductive catalytic material film is formed on the surface of the corrosion-resistant metallic material film so as to extend along the surface of the corrosion-resistant metallic material film. Therefore, the contact area of the conductive catalytic material film with the electrolyte increases, so that it is possible to enhance the photoelectric transfer efficiency without increasing the electric resistance even if the thickness of the conductive catalytic material film is decreased. Therefore, according to the present invention, even if an expensive material, such as platinum, is used as the material of the conductive catalytic material film, it is possible to provide an inexpensive counter electrode and an inexpensive dye sensitizing solar cell having the counter electrode since it is possible to decrease the thickness of the conductive catalytic material film.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a schematic sectional view of a preferred embodiment of a dye sensitizing solar cell according to the present invention;
FIG. 2 is a schematic sectional view of a counter electrode of the dye sensitizing solar cell of FIG. 1;
FIG. 3 is an electron micrograph showing a cross section of a counter electrode of a dye sensitizing solar cell according to the present invention, which corresponds to FIG. 2;
FIG. 4 is a schematic sectional view of a conventional dye sensitizing solar cell; and
FIG. 5 is a schematic sectional view of a counter electrode of the conventional dye sensitizing solar cell of FIG. 4.

### DESCRIPTION OF THE PREFERRED EMBODIMENTS

Referring now to the accompanying drawings, the preferred embodiments of the present invention will be described below in detail.

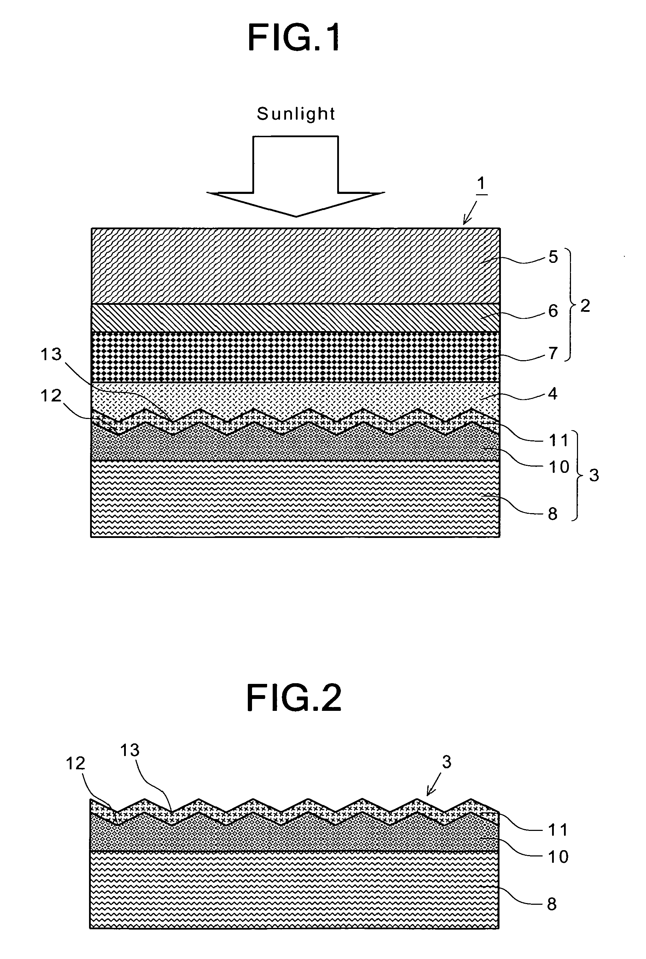

FIG. 1 shows a preferred embodiment of a dye sensitizing solar cell 1 according to the present invention. As shown in FIG. 1, the dye sensitizing solar cell 1 in this preferred embodiment comprises a photoelectrode 2, a counter electrode 3, and an electrolyte 4 filled in a space therebetween.

The photoelectrode 2 comprises a transparent substrate member 5 (a light permeable substrate), a transparent electrode film 6 formed on the lower side of the substrate member 5 in FIG. 1, a porous semiconductor electrode film 7 formed on the surface (on the lower side in FIG. 1) of the transparent electrode film 6, and a sensitizing dye absorbed and carried on the porous semiconductor electrode film 7.

The substrate member 5 may be made of a transparent resin material, such as acrylic resin, polyethylene terephthalate (PET), polyethylene naphthalene (PEN), polyolefine or polycarbonate (PC), or a transparent glass material. When a transparent resin material is used, the substrate member 5 may be formed by a molding method, such as the injection molding, thermal compression molding or extrusion molding.

As shown in FIG. 1, on the surface of the substrate member 5, the transparent electrode film 6 is formed so as to have a substantially uniform thickness (e.g., 700 nm). The transparent electrode film 6 is formed by sputtering. In this sputtering, indium-tin oxide (ITO) is used as a target material. For example, argon gas and oxygen gas are fed into a sputtering apparatus at 100 sccm and 2 sccm, respectively, and the pressure in the apparatus is set to be in the range of from 0.5 Pa to 3 Pa. A power of 1 to 3 kW is applied to the interior of the apparatus to produce plasma. Thus, the transparent electrode film 6 is formed so as to have a substantially uniform thickness.

On the transparent electrode film 6 thus formed, the porous semiconductor electrode film 7 of titanium dioxide (TiO₂) or the like is formed so as to have a predetermined thickness (e.g., 10⁴ nm) (see FIG. 1). The porous semiconductor electrode film 7 is formed by a method comprising the steps of applying a suspension containing semiconductor particles on the transparent electrode film 6, and drying and burning the applied suspension. Then, on the porous semiconductor electrode film 7 thus formed, a sensitizing dye (e.g., ruthenium complex) having a photoelectric transfer function is absorbed and carried. Furthermore, the porous semiconductor electrode film 7 may be formed by the electrolytic deposition method or the hydrothermal treatment method in place of the burning method. The porous semiconductor electrode film 7 may be formed of zinc oxide or the like in place of titanium dioxide.

If the porous semiconductor electrode film 7 of the photoelectrode 2 thus formed is irradiated with sunlight to excite the sensitizing dye carried thereon, electrons of the sensitizing dye move toward the transparent electrode film 6.

As shown in FIGS. 1 and 2, the counter electrode 3 comprises a counter substrate member (counter substrate) 8, a corrosion-resistant metallic material film 10 formed on the surface (the upper surface in FIG. 1) of the counter substrate member 8, and a conductive catalytic material film 11 formed on the surface of the corrosion-resistant metallic material film 10. The counter substrate member 8 may be formed of a resinmaterial, such as acrylic resin, polyethylene terephthalate (PET), polyethylene naphthalene (PEN), polyolefine or polycarbonate (PC), or a glass material.

The corrosion-resistant metallic material film 10 may be made of titanium, tantalum, a titanium alloy or a tantalum alloy, and is preferably titanium. The corrosion-resistant metallic material film 10 may be formed on the counter substrate member 8 by sputtering so as to have a predetermined thickness (e.g., 200 nm) . In this sputtering, the temperature of the counter substrate member 8 is adjusted to be a room temperature, and titanium is used as a target material. For example, argon gas is fed into a sputtering apparatus at 10 sccm, and the pressure in the apparatus is set to be about 1 Pa. A power of 2 kW is applied to the interior of the apparatus to produce plasma. The thickness of the corrosion-resistant metallic material film 10 is controlled in accordance with the deposition time.

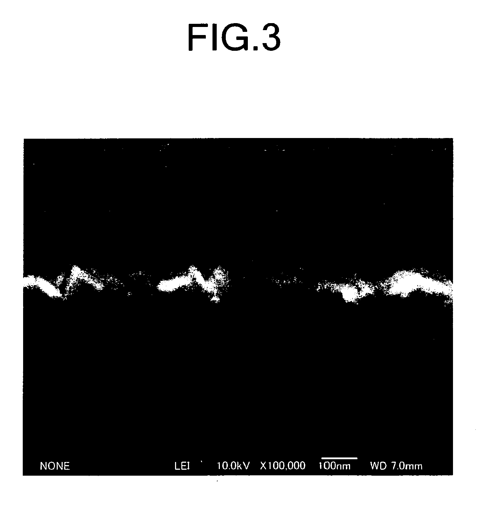

The corrosion-resistant metallic material film 10 formed by sputtering has a large number of regular or irregular recesses 12 in the surface thereof to have irregularities at least on the surface side thereof (see FIGS. 1 and 2 schematically showing the irregularities by substantially triangular cross sections, or FIG. 3 showing an electron micrograph). If the corrosion-resistant metallic material film 10 formed by sputtering is formed at a low temperature (e.g., 25 °C) of the counter substrate member 8, the movement of atoms entering the counter substrate member 8 on the surface thereof are influenced by absorbed atoms (adatoms) to form a crystal structure which has tapered side faces and a semi-spherical dome-shaped upper end portion, so that the surface has irregularities. The crystal structure of the corrosion-resistant metallic material film 10 can also be controlled by parameters, such as the gas pressure in the sputtering apparatus and the input power to the sputtering apparatus, in addition to the temperature of the counter substrate member 8. Thus, the surface of the corrosion-resistant metallic material film 10 can be formed so as to have a desired irregular or concavoconvex shape.

FIG. 3 is an electron micrograph showing a titanium filmservingasacorrosion-resistantmetallicmaterial film 10 which has a dome-shaped crystal structure formed on a glass plate serving as a counter substrate member 8. As canbe seen from FIG. 3, the surface of the titanium film has irregularities having a height or depth of about 10 to 100 nm. The irregularities of the titanium film can be formed so that the height of convexes (or protrusions) or the depth of concaves (or recesses) is preferably in the range of from about 1 nm to about 1000 nm, and more preferably in the range of from about 10 nm to about 100 nm.

The conductive catalytic material film 11 formed on the corrosion-resistant metallic material film 10 may be made of platinum, carbon or palladium, and is preferably platinum. For example, the conductive catalytic material film 11 may be formed on the corrosion-resistant metallic material film 10 by sputtering so as to have a predetermined thickness (e.g., 10 nm) (see FIGS. 1 and 2). In this sputtering, if platinum is used as the material of the conductive catalytic material film 11, platinum is used as a target material. For example, argon gas is fed into a sputtering apparatus at 10 sccm, and the pressure in the apparatus is set to be about 1 Pa. A power of 1 kW is applied to the interior of the apparatus to produce plasma. The thickness of platinum is controlled in accordance with the deposition time. Thus, the conductive catalytic material film 11 is formed so as to have recesses 13 which correspond to the recesses 12 of the corrosion-resistant metallic material film 10. Thus, the counter electrode 3 is formed so as to have the irregularities of the corrosion-resistant metallic material film 10 and conductive catalytic material film 11 on the side of the electrolyte 4 (see FIGS. 1 and 2 schematically showing the irregularities by substantially triangular cross sections, or FIG. 3 showing an electron micrograph). As other methods for forming the irregularities of the conductive catalytic material film 11 in place of sputtering, there are methods of applying, casting, electrodepositing, plating and chemical-modifying a composition containing a catalytic material. For example, in order to carry platinum, platinic acid may be used as a raw material for casting or plating.

The porous semiconductor electrode film 7 of the photoelectrode 2 thus formed is arranged so as to face the conductive catalytic material film 11 of the counter electrode 3 at an interval, and then, the electrolyte 4 is filled in a space between the porous semiconductor electrode film 7 and the conductive catalytic material film 11 to form the dye sensitizing solar cell 1 in this preferred embodiment (see FIG. 1).

Furthermore, as the electrolyte 4, a redox electrolytic solution containing an oxidation-reduction pair, such as an iodine-iodine compound or abromine-bromine compound, is usuallyused. The electrolyte 4 may be a solid electrolyte solidified by using a gelling agent or a p-type semiconductor (CuI), in place of the above described liquid electrolyte.

In the dye sensitizing solar cell 1 thus formed, if sunlight is incident on the photoelectrode 2 from the outside, the sensitizing dye absorbed and carried on the porous semiconductor electrode film 7 is excited to an excited state from an electronic ground state. The electrons of the excited sensitizing dye are injected into the conduction band of TiO₂ forming the porous semiconductor electrode film 7, to move so as to substantially take the shortest route to the transparent electrode film 6.

The electrons moving to the transparent electrode film 6 move to the corrosion-resistant metallic material film 10 of the counter electrode 3 via an external circuit (not shown). The electrons moving to the corrosion-resistant metallic material film 10 move to the electrolyte 4 via the conductive catalytic material film 11 to be carried on ions in the electrolyte 4 to return to the sensitizing dye. Such an operation is repeated to extract electric energy.

According to the dye sensitizing solar cell 1 with the above described construction, since the corrosion-resistantmetallicmaterial film 10 is formed on the counter substrate member 8 by sputtering, the corrosion-resistant metallic material film 10 thus formed has an irregular or concavoconvex structure wherein a large number of fine recesses 12 are formed in the surface thereof. In addition, since the corrosion-resistant metallic material film 10 is continuously formed in vacuum, the surface of the corrosion-resistant metallic material film 10 is not oxidized. Moreover, since the conductive catalytic material film 11 is formed on the corrosion-resistant metallic material film 10 by sputtering, the contact area of the corrosion-resistant metallic material film 10 with the conductive catalytic material film 11 is increased, and the movement of electrons is not obstructed by the oxide film of the corrosion-resistant metallic material film 10.

According to the dye sensitizing solar cell 1 in this preferred embodiment, since the surface of the corrosion-resistant metallic material film 10 formed on the counter substrate member 8 has the large number of fine recesses 12, and since the conductive catalytic material film 11 is formed so as to extend along the corrosion-resistant metallic material film 10, the surface of the conductive catalytic material film 11 also has the large number of fine recesses 13, and the contact area of the conductive catalytic material film 11 with the electrolyte 4 is increased. As a result, even if the thickness of the conductive catalytic material film 11 is decreased, the electric resistance of the counter electrode 3 does not increase.

As described above, the dye sensitizing solar cell 1 in this preferred embodiment can smoothly move electrons between the counter electrode 3 and the photoelectrode 2 even if the thickness of the conductive catalytic material film 11 of the counter electrode 3 is decreased. Therefore, it is possible to enhance the photoelectric transfer efficiency of the dye sensitizing solar cell 1, and it is possible to reduce the costs for preparing parts of the counter electrode 3. In particular, according to this preferred embodiment, the costs can be greatly reduced when the material of the conductive catalytic material film 11 of the counter electrode 3 is platinum.

Furthermore, the dye sensitizing solar cell 1 in this preferred embodiment is designed to cause sunlight to be incident on the substrate member 5, so that the substrate member 5 is made of a transparent plastic material having an excellent light permeability. Therefore, in this preferred embodiment, it is not always required that the counter substrate 8 is made of a plastic material having an excellent light permeability.

In addition, the counter electrode 3 should not be limited to that in the preferred embodiment shown in FIGS. 1 and 2 according to the present invention. The surface (the upper surface in FIGS. 1 and 2) of the counter substrate member 8 may have a large number of recesses, and the corrosion-resistant metallic material film 10 and the conductive catalytic material film 11 may be sequentially formed on the surface of the counter substrate member 8 so that the corrosion-resistant metallic material film 10 and conductive catalytic material film 11 have an irregular or concavoconvex structure.

Then, an example of the counter electrode 3, to which the present invention is applied, will be described below. First, on the surface of a polyethylene terephthalate (PET) film having a thickness of 188 µm serving as the counter substrate 8, a titanium film having a thickness of 300 nm serving as the corrosion-resistant metallic material film 11 was formed by sputtering while conditions were adjusted so as to obtain an irregular or concavoconvex structure by controlling the temperature of the substrate and the gas pressure (e. g. , the temperature of the substrate was 25 °C, the gas pressure was 1 Pa, and the electric energywas DC500W) . Then, on the surface of the titanium film thus formed, a platinum film having a thickness of 10 nm serving as the conductive catalytic material film 11 was formed by sputtering. Thus, the conductive film serving as the counter electrode 3 was formed. The surface of the conductive film had an irregular or concavoconvex structure wherein irregularities were arranged at intervals of 10 to 100 nm. The sheet resistance of the conductive film serving as the counter electrode 3 was 5 Ω/□.

If a plurality of dye sensitizing solar cells in this preferred embodiment are connected to each other in series, or if a plurality of solar cell series, each of which is formed by connecting a plurality of dye sensitizing solar cells in this preferred embodiment to each other in series, are connected to each other in parallel to form a dye sensitizing solar cell assembly, it is possible to obtain electric energy having a desired voltage value. Moreover, if the dye sensitizing solar cell assembly is connected to a storage battery, it is possible to store electric energy.

## Claims

1. A counter electrode for a dye sensitizing solar cell wherein an electrolyte is filled in a space between a photoelectrode and the counter electrode, said counter electrode comprising:
a counter substrate;
a corrosion-resistant metallic material film formed on the counter substrate, said corrosion-resistant metallic material film having a large number of recesses which are formed in a surface thereof and which are arranged in intervals so that the surface of said corrosion-resistant metallic material film has a waveform cross-section; and
a conductive catalytic material film formed on the surface of the corrosion-resistant metallic material film so as to extend along the surface of said corrosion-resistant metallic material film.

2. A counter electrode for a dye sensitizing solar cell as set forth in claim 1, wherein said conductive catalytic material film has a substantially uniform thickness.

3. A counter electrode for a dye sensitizing solar cell as set forth in claim 1, wherein each of said recesses has a depth of 1 to 1000 nm.

4. A counter electrode for a dye sensitizing solar cell as set forth in claim 1, wherein each of said recesses has a depth of 10 to 100 nm.

5. A counter electrode for a dye sensitizing solar cell as set forth in claim 1, wherein said recesses are arranged at intervals of 1 to 1000 nm.

6. A counter electrode for a dye sensitizing solar cell as set forth in claim 1, wherein said recesses are arranged at intervals of 1 to 1000 nm.

7. A counter electrode for a dye sensitizing solar cell as set forth in claim 1, wherein said counter substrate is made of a resin material.

8. A counter electrode for a dye sensitizing solar cell as set forth in claim 1, wherein said corrosion-resistant metallic material film is made of a metal selected from the group consisting of titanium, tantalum, titanium alloys and tantalum alloys.

9. A counter electrode for a dye sensitizing solar cell as set forth in claim 1, wherein said conductive catalytic material film is made of platinum, carbon or palladium.

10. A dye sensitizing solar cell comprising:
a counter electrode as set forth in any one of claims 1 through 9;
a photoelectrode arranged so as to face said counter electrode; and
an electrolyte filled in a space between said counter electrode and said photoelectrode.
